# DEMANDE DE BREVET EUROPEEN

(11) **EP 2 784 923 A1**
(43) Date de publication de la demande: **01.10.2014**
(21) Numéro de dépôt: 14162351.2
(22) Date de dépôt: 28.03.2014
(51) Int. Cl.: H02M 1/14, H02M 1/12, H05K 9/00

(54) **Actionneur électrique ou électromécanique, dispositif de domotique comprenant un tel actionneur et ensemble de motorisation comprenant un tel actionneur**

(30) Priorité: 29.03.2013 FR 1352936; 29.03.2013 FR 1352933
(71) Demandeur: Somfy SAS, 74300 Cluses (FR)
(72) Inventeur: Desbiolles, Claude, 74800 ETEAUX (FR); Lambersend, Bruno, 74130 BONNEVILLE (FR); Riffaud, Stéphane, 74700 SALLANCHES (FR)
(74) Mandataire: Myon, Gérard Jean-Pierre

(57) **Abrégé**

Cet actionneur (101) électrique ou électromécanique comprend des moyens (LE101, LE102) de raccordement de l'actionneur à un réseau (130), un circuit redresseur (111) qui délivre sur deux sorties (S1, S2) une alimentation électrique et un module (115) de commutation de l'alimentation électrique délivrée par le circuit redresseur (111). L'actionneur inclut également un circuit (106) de filtrage des perturbations électromagnétiques issues du module de commutation (115), et du réseau (130) d'alimentation de l'actionneur ainsi qu'une enveloppe conductrice (119) dans laquelle est logé au moins le module de commutation (115). Le circuit de filtrage comprend au moins un condensateur (C105a) de mode commun et le module de commutation (115) est raccordé aux sorties (S1, S2) du circuit redresseur (111) au moyen d'une première (LE101') et d'une deuxième (LE102') lignes électriques. Une seule des première et deuxième lignes électriques est raccordée, par au moins un condensateur de mode commun (C105a) appartenant au circuit de filtrage (106), à l'enveloppe conductrice (119) qui n'est pas raccordé à la terre.

## Description

La présente invention concerne un actionneur électrique ou électromécanique, un dispositif de domotique comprenant un tel actionneur, ainsi qu'un ensemble de motorisation d'un écran de fermeture ou de protection solaire, comprenant un tel actionneur.

Au sens de la présente invention, un dispositif de domotique peut être une lampe, une installation de climatisation ou de chauffage ainsi qu'un écran de fermeture ou de protection solaire, qui quant à lui peut être un volet, une porte, une grille, un store, ou tout autre matériel équivalent.

Dans le domaine de la compatibilité électromagnétique appliquée aux actionneurs électriques ou électromécaniques, il est connu d'utiliser des circuits de filtrage du bruit électromagnétique généré par les composants électroniques compris dans l'actionneur et du bruit électromagnétique provenant d'un réseau d'alimentation de l'actionneur. En effet, la limitation des perturbations produites par l'actionneur et provenant du réseau d'alimentation, et plus particulièrement des émissions conduites qui se propagent, par conduction, sur les câbles de l'actionneur ou sur le réseau d'alimentation est un problème à considérer lors du design du circuit électrique de l'actionneur.

Un enjeu persistant pour un actionneur reste donc l'optimisation de sa comptabilité électromagnétique, afin que l'actionneur fonctionne dans son environnement électromagnétique de façon satisfaisante, c'est-à-dire sans émettre des perturbations électromagnétiques trop importantes qui perturbent son environnement et ainsi empêchent le bon fonctionnement d'autres équipements environnants et sans subir des perturbations électromagnétiques qui perturbent son fonctionnement.

En outre, il importe de simplifier la conception ainsi que la connectique du circuit électrique, et plus particulièrement du circuit de filtrage des perturbations électromagnétiques. Ceci permet de limiter son encombrement et de faciliter l'installation de l'actionneur, ainsi que d'optimiser les coûts de fabrication.

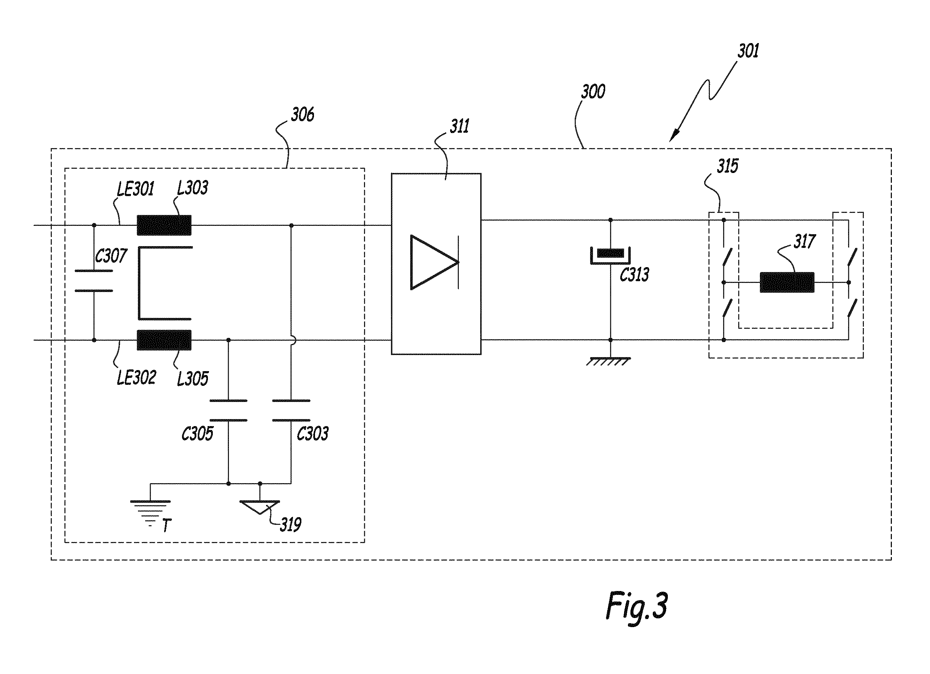

La figure 3 montre un schéma électrique 300 d'un actionneur 301 de l'art antérieur qui comporte en entrée deux lignes électriques LE301 et LE302 destinées à être reliées respectivement à la phase et au neutre d'un réseau électrique qui alimente l'actionneur. L'actionneur 301 comprend un circuit de filtrage 306 des perturbations électromagnétiques, un circuit redresseur 311, un condensateur de stockage C313, un module de commutation 315 et un moteur électrique 317.

Le circuit de filtrage 306 est positionné en entrée de l'actionneur 301 et comprend une bobine de mode commun L303, L305, et un condensateur de mode commun C303, C305 par lignes électriques LE301 et LE302, ainsi qu'un condensateur de mode différentiel C307. Le condensateur de mode différentiel C307 est connecté entre les deux lignes électriques LE301 et LE302. Chaque bobine de mode commun L303 et L305 est connecté entre, d'une part, une borne différente du condensateur C307 et, d'autre part, un condensateur de mode commun C303, C305 différent. Les condensateurs de mode commun C303, C305 sont reliés entre une bobine de mode commun différente, respectivement L303 ou L305, et un boîtier 319 de l'actionneur 301, lequel boîtier 319 est connecté à la terre T.

Il est ainsi nécessaire lors de l'installation de l'actionneur 301 de tirer un câble de terre entre le boîtier 319 et la terre, ce qui complexifie l'installation et augmente les coûts d'installation, ainsi que les coûts de fabrication, puisqu'il est nécessaire de fournir un câble de terre avec l'actionneur 301.

Par ailleurs, un actionneur conforme à l'art antérieur, équipé de trois lignes électriques en entrée, comprend un circuit de filtrage qui comprend deux condensateurs de mode différentiel, trois bobines de mode commun et trois condensateurs de mode commun. Ainsi, suivant le nombre d'entrée de l'actionneur, le nombre de composants pour le circuit de filtrage n'est pas le même, ce qui implique que le coût de fabrication n'est pas le même et que la conception du circuit électrique est plus complexe.

L'art antérieur ne permet donc ni d'optimiser le nombre de composants utilisés dans un circuit de filtrage des perturbations électromagnétiques, ni d'optimiser les coûts. Il impose, en outre, de connecter l'actionneur à la terre.

C'est à ces inconvénients qu'entend plus particulièrement remédier l'invention en proposant un nouvel actionneur dont le circuit électrique est simplifié, qui a un encombrement limité et dont l'installation est facilitée.

A cet effet, l'invention concerne un actionneur électrique ou électromécanique comprenant des moyens de raccordement de l'actionneur à un réseau d'alimentation électrique, un circuit redresseur, comprenant au moins deux entrées et délivrant sur deux sorties une alimentation électrique, un module de commutation de l'alimentation électrique délivrée par le circuit redresseur, une enveloppe conductrice dans laquelle est logé au moins le module de commutation, un circuit de filtrage des perturbations électromagnétiques issues du module de commutation, et du réseau d'alimentation de l'actionneur, ce circuit de filtrage comprenant au moins un condensateur de mode commun, dans lequel le module de commutation est raccordé aux sorties du circuit redresseur au moyen d'une première et d'une deuxième lignes électriques. Conformément à l'invention, une seule des première et deuxième lignes électriques est raccordée, par au moins un condensateur de mode commun appartenant au circuit de filtrage, à l'enveloppe conductrice qui n'est pas raccordé à la terre.

Grâce à l'invention, il n'est plus nécessaire de connecter l'enveloppe conductrice à la terre, et le nombre de composants utilisés et l'encombrement du circuit électrique est optimisé, puisqu'une seule des deux lignes électriques est raccordée à un condensateur de mode commun. Ainsi le coût de fabrication et d'installation est diminué.

Selon des aspects avantageux mais non obligatoires de l'invention, un tel actionneur peut incorporer une ou plusieurs des caractéristiques suivantes, prises isolément ou selon toutes les combinaisons techniquement admissibles :
- L'actionneur comprend en outre un condensateur de stockage connecté entre les deux sorties du circuit redresseur.
- Le circuit de filtrage est un filtre qui atténue les fréquences supérieures à 10 kHz depuis l'actionneur vers le réseau d'alimentation électrique.
- La capacité globale du ou des condensateurs de mode commun est supérieure à une valeur d'une capacité d'un condensateur parasite représentatif d'une liaison électrique entre l'enveloppe conductrice et son environnement.
- Le circuit de filtrage comprend un condensateur de mode différentiel connecté entre les moyens de raccordement de l'actionneur au réseau d'alimentation électrique, deux bobines de mode commun connectées chacune entre une borne différente du condensateur de mode différentiel et une entrée différente du circuit redresseur, au moins un condensateur de mode commun connecté entre une des deux sorties du circuit redresseur et l'enveloppe conductrice, alors qu'une masse électronique est connectée à une des deux sorties du circuit redresseur.
- Le circuit de filtrage comprend au moins un condensateur de mode différentiel connecté entre la première et la deuxième ligne électrique et positionné entre le circuit redresseur et le module de commutation.
- Le circuit redresseur comprend trois entrées connectées aux moyens de raccordement de l'actionneur au réseau d'alimentation électrique, tandis que le circuit de filtrage est positionné entre le circuit redresseur et le module de commutation et comprend un condensateur de mode différentiel reliant deux lignes électriques en sortie du circuit redresseur, deux bobines de mode commun connectées chacune entre une borne différente du condensateur de mode différentiel, au moins un condensateur de mode commun reliant une des deux bobines de mode commun à l'enveloppe conductrice, alors qu'une masse électronique est connectée à une des deux sorties du circuit redresseur.
- Un moteur électrique est compris dans l'actionneur et connecté en sortie du module de commutation.
- une seule des première et deuxième lignes électriques est raccordée à l'enveloppe conductrice qui n'est pas raccordé à la terre, par deux condensateurs de mode commun connectés en série.

L'invention concerne également un dispositif de domotique qui comprend un actionneur tel que défini ci-dessus.

Enfin, l'invention concerne également un ensemble de motorisation d'écran de fermeture ou de protection solaire qui comprend un actionneur comprenant un moteur électrique connecté en sortie d'un module de commutation.

L'invention sera mieux comprise et d'autres avantages de celle-ci apparaitront plus clairement à la lumière de la description qui va suivre, de deux modes de réalisation d'un actionneur électrique ou électromécanique, d'un dispositif de domotique comprenant un tel actionneur et d'un ensemble de motorisation d'un écran de fermeture ou de protection solaire comprenant un tel actionneur, donnée seulement à titre d'exemple et faite en référence aux dessins annexés dans lesquels :
- la figure 1 est une représentation schématique du circuit électrique d'un actionneur conforme à un premier mode de réalisation, et qui est relié à un réseau électrique ;
- la figure 2 est une représentation analogue à la figure 1 pour un actionneur conforme à un deuxième mode de réalisation ;
- la figure 3 est une représentation schématique du circuit électrique d'un actionneur de l'art antérieur.

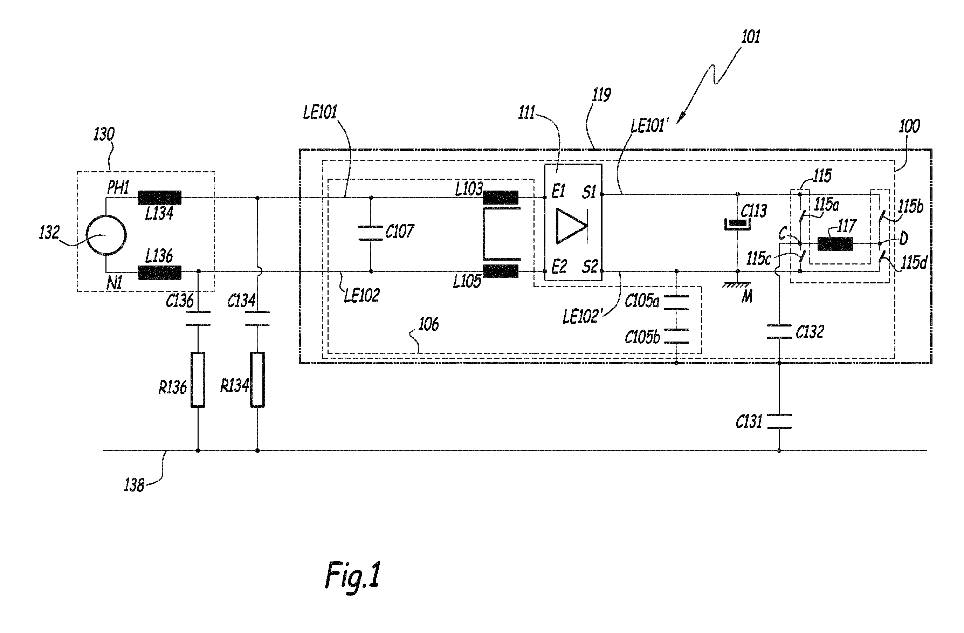

Sur la figure 1, un circuit électrique 100 d'un actionneur électromécanique 101 est connecté à un réseau électrique 130. Le réseau électrique 130 est un réseau monophasé qui est ici représenté schématiquement, afin d'illustrer la circulation de courants de perturbation électromagnétique et les interactions entre l'actionneur 101, le réseau 130 et un environnement électrique 138 de l'actionneur 101. Le réseau électrique 130 est représenté par un générateur 132 dont une première borne PH1 représente la phase, tandis qu'une deuxième borne N1 représente le neutre et dont chaque borne est reliée à une bobine L134, L136 différente.

En outre, la liaison électrique entre le réseau 130 et son environnement électrique 138 est représentée à l'aide de deux condensateurs C134, C136 et de deux résistances R134, R136 qui correspondent à l'impédance équivalente entre l'environnement 138 et le réseau 130. Pour la représentation, chaque bobine L134 et L136 est connectée entre le générateur 132 et respectivement les condensateurs C134, C136 branchés en série avec respectivement les résistances R134, R136. Les résistances R134, R136 sont, quant à elles, connectées à l'environnement 138 de l'actionneur 101.

L'actionneur 101 comprend une enveloppe conductrice 119, c'est-à-dire par exemple un boîtier métallique qui entoure le circuit électrique 100. Le circuit 100 comprend en entrée des moyens de raccordement de l'actionneur 101 au réseau 130 représentés par un premier et un deuxième câbles électriques LE101 et LE102. Les deux câbles électriques LE101 et LE102 sont connectés au réseau 130 et, plus précisément, à la bobine L134 pour le premier câble LE101 et à la bobine L136 pour le deuxième câble LE102.

Le circuit électrique 100 comprend un condensateur de mode différentiel C107, deux bobines de mode commun L103 et L105, un circuit redresseur 111, un condensateur de stockage C113, deux condensateurs de mode commun C105a, C105b, un module de commutation 115 et un moteur électrique 117.

Le condensateur de mode différentiel C107 est connecté entre les deux câbles électriques LE101 et LE102 et positionné en entrée du circuit électrique 100. Il est destiné à être connecté au réseau 130. Les deux bobines de mode commun L103 et L105 sont connectées chacune entre une borne différente du condensateur de mode différentiel C107 et une entrée E1, E2 différente du circuit redresseur 111, sachant que le circuit redresseur 111 comprend deux entrées E1, E2 et deux sorties S1, S2 sur lesquelles il délivre une alimentation électrique. Une première et une deuxième lignes électriques LE101' et LE102' permettent de connecter les sorties S1, S2 du circuit redresseur 111 au reste du circuit 100. La deuxième sortie S2 est connectée au moyen de la deuxième ligne électrique LE102' à une masse électronique M qui représente une tension de référence de 0 Volts tandis que les deux condensateurs C105a, C105b de mode commun sont connectés, en série, entre la deuxième sortie S2 et l'enveloppe conductrice 119.

En outre, le condensateur de stockage C113 est connecté entre les deux sorties S1 et S2 du circuit redresseur 111, alors que le module de commutation 115 est connecté, en parallèle, au condensateur de stockage C113, entre les sorties S1 et S2. Ainsi les première et deuxième lignes électriques LE101' et LE102' relient les sorties S1 et S2 au module de commutation 115.

Le module de commutation 115 comprend quatre interrupteurs notés respectivement 115a, 115b, 115c, 115d et le moteur 117 est alimenté par l'intermédiaire de ces interrupteurs. Plus précisément, le moteur 117 comprend une première borne C connectée entre les interrupteurs 115a et 115c et une deuxième borne D connectée entre les interrupteurs 115b et 115d.

De plus, l'enveloppe conductrice 119 n'est pas connectée à la terre.

Le condensateur de mode différentiel C107 permet de filtrer le bruit électromagnétique de mode différentiel. Ce bruit de mode différentiel est provoqué par un courant de perturbation ID qui se propage sur les lignes électriques LE101' et LE102' dans deux sens différents. C'est-à-dire en direction du moteur 117 sur la ligne LE101' et en direction du réseau 130 sur la ligne LE102'.

De plus, les bobines de mode commun L103 et L105 et les condensateurs de mode commun C105a et C105b permettent de filtrer le bruit électromagnétique de mode commun. Le bruit de mode commun est dû à un courant de perturbation de mode commun IC qui se propage sur les deux lignes électriques LE101' et LE102' dans le même sens, c'est-à-dire du réseau 130 vers le module de commutation 115 et le moteur 117 pour les perturbations générées par le réseau 130, respectivement du module de commutation 115 et du moteur 117 vers le réseau 130 pour les perturbations générées par le module de commutation 115 et par le moteur 117, et passent par l'environnement 138 et l'enveloppe conductrice 119.

Il est connu que dans ce type d'application, les perturbations de mode commun sont prépondérantes par rapport aux perturbations de mode différentiel. Par la suite, on s'intéressera plus particulièrement aux perturbations de mode commun.

Les courants IC, ID de perturbation de mode commun et de mode différentiel sont essentiellement produits par le module de commutation 115 et le moteur 117 et par des courants de perturbation provenant du réseau 130.

Des premier et deuxième condensateurs parasites C131, C132 représentent respectivement la liaison électrique capacitive entre l'enveloppe conductrice 119 et l'environnement 138 et la liaison électrique capacitive entre, d'une part, l'ensemble formé par le moteur 117 et le module de commutation 115 et, d'autre part, l'enveloppe conductrice 119. Plus précisément, les premier C131 et deuxième C132 condensateurs parasites représentent le risque que des courants perturbateurs issus de l'actionneur 101 et correspondant au bruit électromagnétique soient réinjectés sur le réseau 130 ou sur des équipements électroniques environnant l'actionneur 101, c'est-à-dire sur l'environnement électrique 138.

En outre, seule la deuxième ligne électrique LE102' est connectée à un condensateur de mode commun C105a, C105b. Cependant le condensateur de stockage C113 peut être assimilé à un condensateur de mode commun connecté à la première ligne électrique LE101'. Le condensateur de stockage C113 permet de stocker l'énergie pour répondre à l'appel de courant par le moteur 117 lorsqu'il démarre.

Le circuit redresseur 111 permet de passer d'une tension alternative, en entrée E1, E2, à une tension redressée, en sortie S1, S2. Les premier et deuxième condensateurs C105a, C105b de mode commun sont placés en sortie S2 du circuit redresseur 111.

Le module de commutation 115 permet la commutation de l'alimentation électrique délivrée par le circuit redresseur 111 dans les enroulements statoriques du moteur 117.

La capacité équivalente des condensateurs de mode commun C105a, C105b est supérieure à la capacité du premier condensateur parasite C131, de sorte que seulement une partie relativement faible des courants de perturbation passent dans l'environnement électrique 138. Les condensateurs de mode commun C105a, C105b permettent de faire en sorte que les courants IC parasites de mode commun, dont la fréquence est supérieure à 10 kHz, recirculent dans le circuit 100 de l'actionneur 101, plus particulièrement en direction de la source de perturbation qui est l'ensemble composé du module de commutation 115 et du moteur 117. Ainsi les courants IC de perturbation de mode commun ne sont pas injectés sur le réseau 130 ou à l'extérieur de l'enveloppe conductrice 119 dans l'environnement électrique 138.

Les bobines de mode commun L103, L105, les condensateurs de mode commun C105a, C105b et le condensateur de mode différentiel C107 appartiennent à un circuit de filtrage 106 des perturbations électromagnétiques issues du module de commutation 115, du moteur 117 et du réseau 130. Ils permettent de réaliser un filtrage adapté, afin de conserver le courant et la tension délivrés par le réseau 130 et de filtrer les courants de perturbation IC et ID. Il s'agit généralement d'un filtrage passe-bas qui permet de filtrer le bruit électromagnétique et donc les courants IC, ID de perturbation qui ont des fréquences comprises entre 10 kHz et 10 MHz.

Selon une variante non représentée, le circuit redresseur 111 est positionné entre le réseau 130 d'alimentation électrique, représenté à la figure 1 et les bobines de mode commun L103, L105. Dans cette variante, les bobines de mode commun L103, L105 sont connectées sur les lignes électriques LE101' et LE102'.

Selon une autre variante non représentée, le circuit redresseur 111 est positionné entre le réseau 130, représenté à la figure 1, et le condensateur de mode différentiel C107. Ce positionnement du circuit redresseur 111 permet de réduire le courant en mode « veille » qui s'établit entre les lignes électrique LE101' et LE102', à travers le condensateur C107.

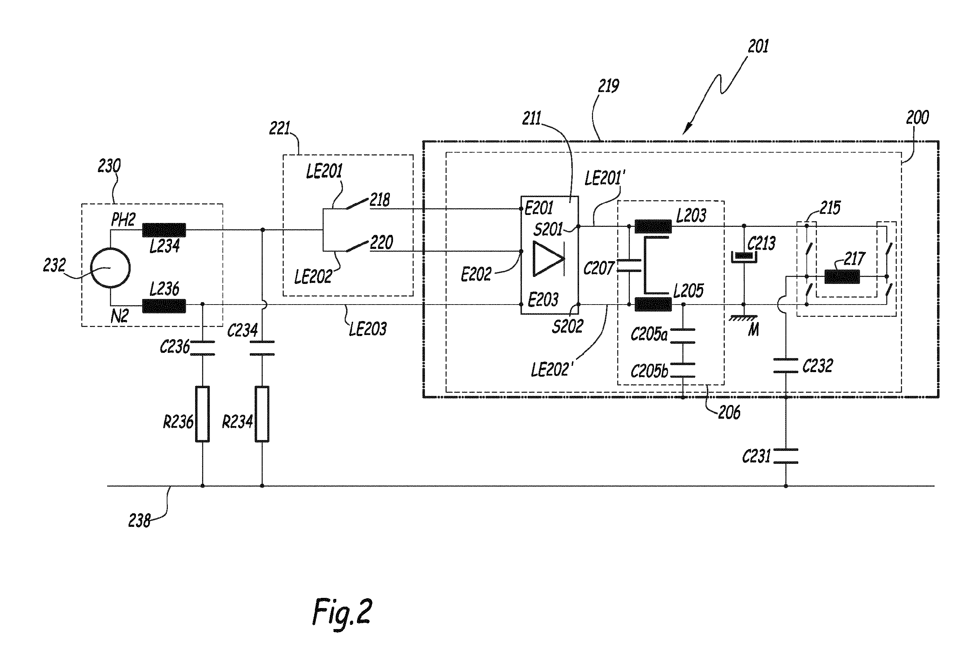

La figure 2 illustre un actionneur 201 dont un circuit électrique 200 est relié à un réseau électrique 230, cet actionneur 201 étant conforme à une deuxième mode de réalisation de l'invention. A la figure 2, les éléments semblables à ceux du premier mode de réalisation portent les mêmes références numériques qu'à la figure 1, respectivement augmentées de 100.

Ainsi, le réseau 230 est représenté par un générateur 232 et deux bobines L234 et L236. De même, l'actionneur 201 comprend une enveloppe conductrice 219 dans laquelle est logé le circuit électrique 200 qui comprend un circuit redresseur 211 qui inclut trois entrées E201, E202, E203 et deux sorties S201, S202, un condensateur de mode différentiel C207, deux bobines de mode commun L203 et L205, deux condensateurs de mode commun C205a et C205b, un condensateur de stockage C213 connecté entre les deux sorties S201, S202, un module de commutation 215 et un moteur 217. Les bobines de mode commun L203, L205, les condensateurs de mode commun C205a, C205b et le condensateur de mode différentiel C207 appartiennent à un circuit de filtrage 206 des perturbations électromagnétiques issues du module de commutation 215, du moteur 217 et du réseau 230. Le circuit de filtrage 206 est globalement similaire au circuit de filtrage 106 du premier mode de réalisation. Les condensateurs de mode commun C205a et C205b sont connectés en série entre la sortie S202 et l'enveloppe conductrice 219 qui n'est pas connectée à la terre. En outre, les condensateurs parasites sont notées C231 pour le premier condensateur parasite et C232 pour le deuxième condensateur parasite. Le générateur 232 comprend deux bornes PH2, N2 qui correspondent respectivement à la phase et au neutre.

Les différences entre le premier mode de réalisation et le deuxième mode de réalisation sont la position du circuit redresseur 211 et le fait que dans le deuxième mode de réalisation, le circuit électrique 200 comprend trois câbles électriques en entrée notés LE201, LE202 et LE203 qui représentent des moyens de raccordement de l'actionneur 201 au réseau 230. Les câbles LE201 et LE202 sont connectés à la bobine L234, elle-même connectée à la borne PH2 du générateur 132, tandis que le câble électrique LE203 est connecté à la bobine L236, elle-même connectée à la borne N2 du générateur 132. Le circuit redresseur 211 comprend trois entrées E201, E202, E203 et deux sorties S201 S202, le fonctionnement du deuxième mode de réalisation est, en sortie du circuit redresseur 211, globalement similaire à celui du premier mode de réalisation puisqu'on a deux lignes électriques notées LE201', LE202' et que les connexions sont les mêmes que dans le premier mode de réalisation, mis à part que le circuit redresseur a été déplacé. Ainsi, la masse électronique M est connectée sur la ligne électrique LE202' entre les condensateurs de mode commun C205a et C205b et le module de commutation 215.

Les deux câbles électriques LE201 et LE202 en entrée du circuit 200 permettent d'avoir une commande séparée dans le cas où le moteur 217 a deux sens de fonctionnement. Les câbles électriques LE201 et LE202 comprennent chacun un interrupteur noté respectivement 218, 220. L'ensemble formé par les deux interrupteurs 218, 220 peut être assimilé à un interrupteur 221 de commande du moteur 217 positionné en dehors de l'enveloppe conductrice 219. Ainsi, lorsqu'un utilisateur commande le fonctionnement du moteur dans le premier sens, l'interrupteur 218 est fermé et l'interrupteur 220 est ouvert et lorsqu'il commande le fonctionnement du moteur dans le second sens, l'interrupteur 220 est fermé et l'interrupteur 218 est ouvert. Ce type d'actionneur 201 est par exemple utilisé dans le cadre de la motorisation de volets roulants à commande filaire.

Grâce au positionnement du circuit redresseur 211, le nombre de composants utilisés pour le filtrage, c'est-à-dire le nombre de condensateurs de mode commun C205a, C205b, de bobines de mode communs L203, L205 et de condensateurs de mode différentiel C207, est limité en comparaison à l'art antérieur. En effet le circuit redresseur 211 permet de passer d'un circuit électrique avec trois câbles électriques LE201, LE202, LE203 à un circuit électrique avec deux lignes électriques LE201', LE202' en sortie du circuit redresseur. Les deux lignes électriques LE201' et LE202' relient les deux sorties S201 et S202 au module de commutation 215.

De plus, dans les premier et deuxième modes de réalisation l'enveloppe conductrice 219 n'est pas raccordée à la terre, ce qui facilite l'installation d'un ensemble de motorisation comprenant un tel actionneur, puisqu'il n'est pas nécessaire de tirer un câble jusqu'à la terre lors de l'installation de l'actionneur 101, 201. Ceci permet également de réduire le coût de fabrication de l'actionneur 101, 201, puisqu'il n'est pas non plus nécessaire de fournir un câble de terre avec l'actionneur 101, 201.

En outre, dans les deux modes de réalisation, on obtient une double isolation grâce aux deux condensateurs de mode commun C105a, C105b, C205a, C205b et puisque l'enveloppe conductrice 119, 219, n'est pas raccordée à la terre. Cette double isolation garantie qu'aucune partie accessible de l'actionneur 101, 201 n'est soumise à une tension dangereuse, même à la suite d'un défaut d'un des deux condensateurs de mode commun C105a, C105b, C205a, C205b. Cette double isolation présente un avantage en termes de coût et de sécurité par rapport à l'actionneur 301 de l'art antérieur qui n'a qu'une simple isolation et est relié à la terre.

Dans le deuxième mode de réalisation, le circuit redresseur 211 délivre une alimentation électrique continue en sortie et son positionnement en avant du condensateur de mode différentiel C207 par rapport au réseau 230 permet de réduire le courant en mode « veille » qui s'établit entre les lignes électriques LE101', LE102', à travers le condensateur C207.

Selon une variante non représentée, dans le deuxième mode de réalisation, le circuit redresseur 211 est positionné entre le condensateur de mode différentiel C207 et le module de commutation 215, c'est-à-dire encore, entre le réseau 230 et les bobines de mode commun L203, L205. Dans cette variante, afin d'être performant le circuit de filtrage comprend deux condensateurs de modes différentiels, et non plus un seul, branchés respectivement entre les câbles électriques LE201 et LE203 et entre les câbles électriques LE202 et LE203. Les deux condensateurs de mode différentiel sont ainsi connectés en entrée du circuit redresseur 211.

Selon une autre variante non représentée, applicable au deuxième mode de réalisation, le circuit redresseur 211 est positionné entre les bobines de mode commun et le module de commutation 215, c'est-à-dire encore, entre le réseau 230 et les condensateurs de mode commun C205a, C205b, ou C203, C205. Dans cette variante le circuit comprend deux condensateurs de modes différentiels comme présenté au paragraphe précédent et trois bobines de mode commun, au lieu de deux, connectés respectivement sur les câbles électriques LE201, LE202, LE203 en entrée E1, E2, E3 du circuit redresseur 211.

Les variantes présentées ci-dessus permettent de réduire le nombre de composants utilisés par rapport à l'actionneur de l'art antérieur dans le cas où l'actionneur comprend trois câbles électriques en entrée. Cette réduction du nombre de composants permet une réduction du coût de production de l'actionneur.

Par ailleurs, le fait de ne pas avoir de câble de terre facilite la réalisation du test à la foudre puisqu'il suffit, pour réaliser ce test dans les premier et deuxième modes de réalisation, de mesurer la tension entre la borne PH1, PH2 de phase et la borne N1, N2 de neutre, alors que pour l'actionneur de l'art antérieur 301 il est en plus nécessaire de mesurer la tension entre la phase et la terre, et entre la terre et le neutre. Cette simplification par rapport au test à la foudre permet de faciliter la conception d'une carte électronique comprenant le circuit électronique 100, 200.

En outre, en comparaison à l'actionneur 301 de l'art antérieur, une ligne électrique d'alimentation LE101', LE201' du moteur 117, 217 et du module de commutation 115, 215 n'est pas reliée à un condensateur de mode commun dans les premier et deuxième modes de réalisation.

Selon une variante, le circuit électrique 100, 200 ne comprend qu'un seul condensateur de mode commun C105a, C205a et dans ce cas, le nombre de composants utilisés pour réaliser le filtrage est encore diminué comparativement au circuit électrique 300 de l'art antérieur, ce qui représente un avantage en terme de coût.

Selon une autre variante, les bobines de mode commun L103, L105, L203, L205, le condensateur de mode différentiel C107, C207 et le circuit redresseur 111, 211 sont positionnés dans un module différent de l'enveloppe conductrice 119, 219, avant l'enveloppe conductrice 119, 219, par rapport au réseau 130, 230.

Selon une autre variante, le module de commutation 115, 215 comprend plus ou moins que quatre interrupteurs. Par exemple, dans le cas d'un actionneur comprenant un moteur sans balais (BLDC en anglais) le module de commutation peut comprendre six interrupteurs.

Selon une autre variante, l'actionneur comprend un moteur à carcasse métallique. L'enveloppe conductrice est un tube métallique dans lequel sont logés le moteur et la carte électronique du moteur. Cet agencement contribue à la création de la capacité parasite C132, C232 entre l'ensemble formé par le moteur à carcasse métallique et le module de commutation d'une part, et l'enveloppe conductrice d'autre part. La valeur typique d'une telle capacité parasite est inférieure à 100 pF.

La tension fournie au module de commutation 115, 215 et au moteur sans balais 117, 217 est une tension continue, obtenue grâce au circuit redresseur 111, 211 et au condensateur de stockage C113, C213. Typiquement cette tension continue a une valeur d'environ 325 V ce qui correspond à une tension alternative de 230 V délivrée par le réseau électrique et redressée ensuite.

La capacité du condensateur de stockage C113, C213 est typiquement comprise entre 10 et 200 µF pour pouvoir stocker l'énergie nécessaire au fonctionnement du moteur et lisser le signal d'alimentation électrique. Ce condensateur est choisi aussi de sorte à présenter une faible résistance série (non représentée), largement inférieure à 1Ω, typiquement inférieure à 10mΩ, et par conséquent afin de limiter l'échauffement de la carte électronique du moteur par effet Joule. Un autre effet avantageux ce choix est la faible contribution de cette résistance série à l'impédance présentée par le condensateur de stockage C113, C213 entre les lignes électriques LE101' et LE102', respectivement LE201' et LE202'.

Cette impédance du condensateur de stockage varie avec la géométrie et la technologie utilisée, présentant un premier domaine de fréquences, pour lequel l'impédance du condensateur décroît quand la fréquence augmente, et un deuxième domaine de fréquences, pour lequel cette impédance augmente avec la fréquence. Le condensateur de stockage est choisi de sorte à présenter une impédance inférieure à une valeur prédéterminée pour le domaine des fréquences à filtrer. En particulier la valeur minimale de l'impédance du condensateur de stockage, sensiblement égale à sa résistance série, est atteinte autour de la fréquence de commutation du module de commutation115, 215.

Cette fréquence est supérieure à 10 kHz, par exemple autour 16 kHz. En cours de fonctionnement la fréquence de commutation et le rapport cyclique peuvent varier.

Le spectre des signaux perturbateurs générés comprend une fréquence fondamentale égale à la fréquence de commutation, et des harmoniques de cette fréquence. Dans le cas d'une application domotique l'amplitude des signaux perturbateurs est de l'ordre de 1 V pour la composante fondamentale et inférieure à 1 mV pour les harmoniques mesurées, dans cet exemple entre150 kHz et 30 MHz.

Le choix de la topologie, des valeurs des capacités des condensateurs et de la technologie de réalisation du condensateur de stockage ont pour effet que, aux fréquences des perturbations à filtrer, les impédances présentées par les branches permettant le retour des courants perturbateurs vers la source de perturbation (le module de commutation et la carte électronique du moteur) sont faibles devant les impédances conduisant les courants perturbateurs vers le réseau électrique.

Ainsi l'agencement des condensateurs et le choix des valeurs de leurs capacités proposés par l'invention permettent de raccorder une seule des lignes électriques L101', LE102', respectivement LE201', LE202' à l'enveloppe conductrice et d'utiliser les capacités parasites pour évacuer les courants perturbateurs vers leur source.

Par exemple, dans le cas du raccordement de la ligne LE102', LE202' à l'enveloppe conductrice 119, 219 par l'intermédiaire de condensateurs de mode commun C105a et C105b, respectivement C205a, C205b, les signaux perturbateurs circulant sur la ligne LE101', LE201' (non connectées par l'intermédiaire de condensateurs de mode commun à l'enveloppe conductrice) peuvent être évacués vers leur source via la capacité parasite C132, C232 et la capacité de stockage C113, C213.

La valeur de la capacité du condensateur de filtrage de mode différentiel C107, C207 est typiquement comprise entre 0,1 et 0,5 µF, et celle des condensateurs de mode commun C105a, C105b, C205a, C205b entre 1 et 5 nF.

Dans cet exemple, la capacité équivalente des condensateurs de mode commun C105a et C105b, respectivement C205a et C205b reste inférieure à 3 nF, répondant ainsi à des contraintes de sécurité liées à l'application domotique. En plus de la faible valeur de la capacité équivalente des condensateurs de mode commun, une topologie à deux condensateurs montés en série est choisie, pour assurer la sécurité des utilisateurs pouvant toucher l'enveloppe conductrice, notamment en cas de défaillance d'un des condensateurs.

Cette topologie à deux condensateurs en série reliant une seule des lignes électriques LE101', LE102', respectivement LE201' LE202' à l'enveloppe conductrice 119, 219 qui n'est pas raccordée à la terre, est applicable à tout mode de réalisation de l'invention pour répondre aux contraintes de sécurité des personnes en cas de contact avec l'enveloppe conductrice. Si une application n'est pas soumise à de telles contraintes de sécurité, un seul condensateur de mode commun peut relier une seule des lignes électrique LE101', LE102', respectivement LE201' LE202' à l'enveloppe conductrice 119, 219 qui n'est pas raccordée à la terre.

Selon une autre variante, l'enveloppe conductrice 119, est un boîtier en matériau plastique ou autre matériau isolant, comprenant une couche conductrice sur sa surface intérieure, par exemple une couche de peinture métallique ou une feuille ayant une face conductrice.

Selon une autre variante, dans le premier mode de réalisation, le circuit redresseur 111 peut être positionné en différents endroits mais précède toujours le module de contrôle 115 par rapport au réseau 130. Dans le deuxième mode de réalisation, le circuit redresseur 211 est placé avant les éléments de filtrage par rapport au réseau, c'est-à-dire avant le condensateur de mode différentiel C207, les condensateurs de mode commun C205a, C205b et les bobines de mode commun L203, L205, afin de réduire le nombre de composants nécessaires pour le filtrage.

Selon une autre variante, le ou les condensateurs de mode commun sont reliés à la première ligne électrique LE101', LE201' et non à la deuxième ligne électrique LE102', LE202'.

Dans les premier et deuxième modes de réalisation un circuit redresseur 111, 211 est utilisé afin de fournir un courant continu au moteur 117, 217, en variante un convertisseur alternatif continu autre qu'un circuit redresseur est utilisé.

Dans l'exemple de réalisation des figures 1 et 2 décrit précédemment, le réseau électrique 130, 230 est un réseau monophasé et l'actionneur fonctionne en monophasé. L'invention s'applique également à un réseau triphasé et à un actionneur fonctionnant en triphasé, ainsi qu'à des combinaisons réseau triphasé, respectivement monophasé et actionneur monophasé, respectivement triphasé.

Selon une autre variante l'actionneur 101, 201 ne comprend pas un moteur mais une lampe ou une installation de climatisation ou de chauffage. Plus généralement l'actionneur est utilisé au sein d'un dispositif de domotique.

Les caractéristiques techniques des deux modes de réalisation et des variantes envisagées ci-dessus peuvent être combinées entre elles pour générer d'autres modes de réalisation.

## Revendications

1. Actionneur (101, 201) électrique ou électromécanique, comprenant :
- des moyens (LE101, LE102 ; LE201, LE202, LE203) de raccordement de l'actionneur à un réseau (130 ; 230) d'alimentation électrique,
- un circuit redresseur (111 ; 211), comprenant au moins deux entrées (E1, E2 ; E204, E205, E206) et délivrant sur deux sorties (S1, S2 ; S201, S202) une alimentation électrique,
- un module (115 ; 215) de commutation de l'alimentation électrique délivrée par le circuit redresseur (111 ; 211),
- une enveloppe conductrice (119 ; 219) dans laquelle est logé au moins le module de commutation (115 ; 215),
- un circuit (106 ; 206) de filtrage des perturbations électromagnétiques issues du module de commutation (115 ; 215), et du réseau (130 ; 230) d'alimentation de l'actionneur, ce circuit de filtrage comprenant au moins un condensateur (C105a ; C205a) de mode commun,
dans lequel le module de commutation (115 ; 215) est raccordé aux sorties (S1, S2 ; S201, S202) du circuit redresseur (111, 211) au moyen d'une première (LE101' ; LE201') et d'une deuxième (LE102' ; LE202') lignes électriques,
**caractérisé en ce qu'**une seule des première et deuxième lignes électriques (LE101', LE102' ; LE201', LE202') est raccordée, par au moins un condensateur de mode commun (C105a ; C205a) appartenant au circuit de filtrage (106 ; 206), à l'enveloppe conductrice (119 ; 219) qui n'est pas raccordé à la terre.

2. Actionneur selon la revendication 1 **caractérisé en ce qu'**il comprend en outre un condensateur de stockage (C113, C213) connecté entre les deux sorties (S1, S2 ; S201, S202) du circuit redresseur (111 ; 211).

3. Actionneur selon l'une des revendications précédentes, **caractérisé en ce que** le circuit de filtrage (106 ; 206) est un filtre qui atténue les fréquences supérieures à 10 kHz depuis l'actionneur (101 ; 201) vers le réseau (130 ; 230) d'alimentation électrique.

4. Actionneur selon l'une des revendications précédentes, **caractérisé en ce que** la capacité globale du ou des condensateurs de mode commun (C105a, C105b ; C205a, C205b) est supérieure à une valeur d'une capacité d'un condensateur parasite (C131 ; C231) représentatif d'une liaison électrique entre l'enveloppe conductrice (119 ; 219) et son environnement (138 ; 238).

5. Actionneur selon l'une des revendications précédentes, **caractérisé en ce que** le circuit de filtrage (106) comprend :
- un condensateur de mode différentiel (C107) connecté entre les moyens (LE101, LE102) de raccordement de l'actionneur au réseau (130) d'alimentation électrique,
- deux bobines de mode commun (L103, L105) connectées chacune entre une borne différente du condensateur de mode différentiel et une entrée (E1, E2) différente du circuit redresseur (111),
- au moins un condensateur de mode commun (C105a, C105b) connecté entre une des deux sorties (S1, S2) du circuit redresseur (111) et l'enveloppe conductrice (119),
et **en ce qu'**une masse électronique (M) est connectée à une des deux sorties (S1, S2) du circuit redresseur,

6. Actionneur selon l'une des revendications 1 à 4, **caractérisé en ce que** le circuit de filtrage (206) comprend au moins un condensateur de mode différentiel (C207) connecté entre la première (LE201') et la deuxième (LE202') ligne électrique et positionné entre le circuit redresseur (211) et le module de commutation (215).

7. Actionneur selon l'une des revendications 1 à 4 ou 6, **caractérisé en ce que** le circuit redresseur (211) comprend trois entrées (E206, E205, E204) connectées aux moyens (LE201, LE202, LE203) de raccordement de l'actionneur au réseau (230) d'alimentation électrique,
**en ce que** le circuit de filtrage (206) est positionné entre le circuit redresseur (211) et le module de commutation (215) et comprend :
- un condensateur de mode différentiel (C207) reliant deux lignes électriques (LE201', LE202') en sortie du circuit redresseur (211),
- deux bobines de mode commun (L203, L205) connectées chacune entre une borne différente du condensateur de mode différentiel (C207),
- au moins un condensateur de mode commun (C205a, C205b) reliant une des deux bobine de mode commun (L205, L 203) à l'enveloppe conductrice (219),
et **en ce qu'**une masse électronique (M) est connectée à une des deux sorties (S201, S202) du circuit redresseur (211),

8. Actionneur selon l'une des revendications précédentes, **caractérisé en ce qu'**un moteur électrique (117 ; 217) est compris dans l'actionneur (101 ; 201) et connecté en sortie du module de commutation (115 ; 215).

9. Actionneur selon l'une des revendications précédentes, **caractérisé en ce qu'**une seule des première et deuxième lignes électriques (LE101', LE102' ; LE201', LE202') est raccordée à l'enveloppe conductrice (119 ; 219) qui n'est pas raccordé à la terre, par deux condensateurs de mode commun (C105a, C105b, C205a, C205b) connectés en série.

10. Dispositif de domotique **caractérisé en ce qu'**il comprend un actionneur selon l'une des revendications précédentes.

11. Ensemble de motorisation d'écran de fermeture ou de protection solaire, **caractérisé en ce qu'**il comprend un actionneur (101, 201) selon la revendication 8.
